# EUROPÄISCHE PATENTSCHRIFT

(11) **EP 3 303 197 B1**
(45) Veröffentlichungstag und Bekanntmachung des Hinweises auf die Patenterteilung: **30.06.2021**
(21) Anmeldenummer: 16725456.4
(22) Anmeldetag: 19.05.2016
(51) Int. Cl.: B65G 54/02, B65G 47/08, B65G 47/51, B65G 47/86, B65G 47/71, B65G 65/00

(54) **TRANSPORTVORRICHTUNG**
CONVEYING ARRANGEMENT
DISPOSITIF DE TRANSPORT

(30) Priorität: 26.05.2015 DE 102015209613
(43) Veröffentlichungstag der Anmeldung: 11.04.2018
(73) Patentinhaber: Syntegon Packaging Systems AG, 8222 Beringen (CH)
(72) Erfinder: WIPF, Alfred, 79798 Jestetten (DE)
(74) Vertreter: Daub, Thomas
(86) Internationale Anmeldenummer: PCT/EP2016/061228
(87) Internationale Veröffentlichungsnummer: WO 2016/188843

(56) Entgegenhaltungen:
- EP-A1- 1 788 694
- WO-A1-2014/159317
- DE-A1- 3 207 971
- DE-A1- 4 315 373
- DE-A1-102011 085 724
- JP-A- H0 585 620

## Beschreibung

Die Erfindung geht aus von einer Transportvorrichtung nach der Gattung des unabhängigen Anspruchs.

### Stand der Technik

Bekannt sind Transportsysteme, in welchen die Transportkörper (sogenannte Mover) im elektromagnetischen Feld nahezu reibungsfrei gelagert sind. Die regelbaren elektromagnetischen Kräfte werden sowohl für den Antrieb der Transportkörper als auch für elektromagnetische Linearlagerung oder Levitation über eine flache, elektrisch erregte Transportfläche (auch als X-Y-Stator bezeichnet) benutzt. Ein solches System ist in der WO 2013/059934 A1 beschrieben.

Aus der EP 2441307 B1 sind bereits eine Vorrichtung und ein Verfahren zum überführen von Produkten mittels Angreifern bekannt. Die Vorrichtung umfasst einen Linearmotor mit auf einer Führung verschiebbar geführten Fördermengen mit Greifarm zur zeitweiligen Aufnahme von Produkten, wobei die Führung als lineare Führungsstrecke ausgebildet ist. Die Fördermenge sind zur Aufnahme und Ablage der Produkte auf der Führungsstrecke hin und her verschiebbar, wobei bei in Fördererrichtung des Zufuhrförderbandes hintereinander in einer Linie zugeführten Produkten das Zufuhrförderband, das Abfuhrförderband und die Führungsstrecke zumindest in einem seitlichen Überlappungsbereich parallel nebeneinander angeordnet sind. Bei in Förderleistung des Zufuhrförderbandes nebeneinander in Reihen zugeführten Produkten ist das Zufuhrförderband senkrecht zum Abfuhrförderband angeordnet und das Abfuhrförderband und die Führungsstrecke sind parallel zueinander und mit dem Zufuhrförderband zumindest in einem seitlichen Überlappungsbereich nebeneinander angeordnet.

Eine gattungsgemäße Vorrichtung zum Gruppieren von Artikeln oder Behältern ist auch aus der DE 102011085724 A1 bekannt. DE 102011085724 A1 offenbart eine Vorrichtung nach dem Oberbergriff des Anspruchs 1.

Aus der WO 2014/159317 A1 ist eine Fördereinrichtungen mit magnetisch angetriebenen Movern bekannt. Die Mover sind in Führungen einer Transportkette angeordnet und können über ein Magnetfeld in diesen Führungen verschoben werden.

Aus der JP H05 85620 A ist eine Transportvorrichtung bekannt, wobei zur Stabilisierung von Artikeln insbesondere bei einem Förderrad Magnete an der Fördereinrichtung angeordnet sind, die stabilisierend auf die Artikel einwirken.

Der Erfindung liegt die Aufgabe zugrunde, die Flexibilität der Vorrichtung weiter zu erhöhen. Die Aufgabe wird gelöst durch die Merkmale des unabhängigen Anspruchs.

### Vorteile der Erfindung

Die erfindungsgemäße Vorrichtung mit den Merkmalen des unabhängigen Anspruchs hat demgegenüber den Vorteil, dass sich die Flexibilität weiter erhöht. Dies wird erfindungsgemäß dadurch erreicht, dass das Transportsystem, vorzugsweise ein Transportband, zwischen Antriebsfläche und Mover angeordnet ist. Gerade durch diese Anordnung wird es möglich, dass auch ungeordnet zugeführte Produkte in der gewünschten Art und Weise durch den Mover aufgenommen und flexibel gruppiert werden können. Außerdem kann das Transportsystem auch dazu genutzt werden, um einen Mover selbst zu transportieren insbesondere in solchen Bereichen, welche nicht mit einer Antriebsfläche versehen sind. Damit können unter Umständen Antriebsflächen reduziert werden. Dadurch verbilligt sich die Vorrichtung weiter. Außerdem könnten die Mover beispielsweise in eine Wartungsposition oder Ähnliches ausgeschleust werden.

Zudem kann eine Format-Umstellung quasi auf Knopfdruck erfolgen, so dass für jedes Produkt individuell gezielt Verpackungsschritte bzw. Verarbeitungsschritte vorgesehen werden können. Durch die Verwendung eines sogenannten Planarantriebs können die Aufnahme-und Ablagewege des das Produkt fördernden Movers individuell vorgegeben werden. Eine individuelle Anpassung auf Produktströme bzw. Behälter kann durch individuell steuerbare Mover erfolgen. Auch entlang unterschiedlicher Verarbeitungsschritte muss das Produkt nur einmal angefasst werden, so dass weitere Schnittstellen betreffend das Produkthandling unterbleiben können. Das beschriebene Konzept trägt zur mechanischen Standardisierung bei, da dasselbe Transportsystem für unterschiedlichste Verarbeitungsschritte verwendet werden kann. Bislang verwendete Systemkomponenten können entfallen, was zur Kostenreduzierung beiträgt. Das Transportsystem ist nicht mehr von einzelnen Führungen oder Ähnliches abhängig. Auch die Geschwindigkeit der Mover lässt sich individuell steuern und so an gewünschte Bewegungsprofile der weiteren Transportsysteme anpassen. Dadurch kann auch die Geschwindigkeit des Transports optimiert werden. Außerdem kann eine spaltenfreie Ausbildung der Antriebsfläche erreicht werden, was die Reinigbarkeit erleichtert.

Dank der vorgeschlagenen Vorrichtung kann ein besonders kompakter Aufbau erreicht werden. Es wird nur ein geringer Platz benötigt, da aufgrund der flexiblen Bewegungswege der Mover ein minimales Handling der Produkte notwendig wird. Außerdem können unterschiedliche Funktionen realisiert werden wie beispielsweise das Verteilen, das Eintakten oder das Gruppieren ohne Schnittstellen sowie die Übergabe von Produkten. Nur gute Produkte werden verpackt. Schlechte Produkte können erkannt und durch die Mover ausgeschleust werden. Außerdem zeichnet sich die Vorrichtung durch eine modulare Erweiterbarkeit aus. Außerdem wird ein schneller Formatwechsel möglich. Die Reinigbarkeit ist ebenfalls verbessert. Außerdem kann eine optimale Beschickung der nachfolgenden Maschinen erfolgen, da die gewünschten Gruppierungen der Produkte in besonders flexibler Form möglich werden. Zudem kann eine kontaktlose Zufuhr erfolgen. Die Antriebsfläche liegt unterhalb des Transportsystems, sodass eine gute Zugänglichkeit und Sicht auf den Prozess bzw. die Produkte beibehalten werden kann.

In einer zweckmäßigen Weiterbildung ist zumindest eine Produkterkennung bzw. Sensor im Bereich des Transportsystems vorgesehen ist, vorzugsweise außerhalb der Antriebsfläche. Dadurch lässt sich in besonders einfacher Art und Weise eine Positionserkennung der zu bewegenden Produkte durchführen. Dies ist gerade bei ungeordnet zugeführten Produkten vorteilhaft. Außerdem könnte die Produkterkennung auch für andere Zwecke wie beispielsweise eine Qualitätskontrolle der Produkte verwendet werden und wäre somit ohnehin bereits vorhanden.

In einer zweckmäßigen Weiterbildung ist vorgesehen, dass der Mover in Abhängigkeit von der Produkterkennung bzw. dem Sensor eine bestimmte Position anfährt, um das erkannte bzw. sensierte Produkt zu bewegen. In Verbindung beispielsweise mit der Geschwindigkeit des Transportsystems ermittelt eine Steuerung die anzufahren Position des Motors, damit so zuverlässig das Produkt in die gewünschte Position bewegt werden kann. Damit erhöht sich die Betriebssicherheit und Genauigkeit der Vorrichtung.

In einer zweckmäßigen Weiterbildung ist vorgesehen, dass der Mover auf eine Geschwindigkeit gebracht wird, die in etwa einer Geschwindigkeit des Transportsystems entspricht. Damit lässt sich ein besonders schonendes Produkthandling erreichen, indem eine nahezu stoßfreie Übergabe bzw. Übernahme des Produkts durch den Mover realisiert werden kann.

In einer zweckmäßigen Weiterbildung ist vorgesehen, dass der Mover zumindest ein Produkt relativ zu dem Transportsystem, vorzugsweise mit einer Richtungsänderung und/oder Drehung versehen, bewegt. Damit kann der Mover (bzw. mehrere Mover) die Produkte in einer gewünschten Art und Weise, beispielsweise in Reihenform und/oder in bestimmten Gruppen, auf demselben Transportsystem, auf dem auch die Produkte zugeführt wurden, anordnen. Damit lassen sich ungeordnet zugeführte Produkte in einfacher Weise ordnen. Dadurch kann die Übergabe nun geordneter Produkte auf weitere Transportsysteme in der gewünschten Art und Weise unter spezieller Berücksichtigung der nachfolgenden Verarbeitungsschritte zielgenau durchgeführt werden.

In einer zweckmäßigen Weiterbildung ist zumindest ein weiteres Transportsystem benachbart zu dem Transportsystem und/oder der Antriebsfläche vorgesehen. Damit lässt sich wie bereits oben geschrieben eine geordnete Zuführung zu einem weiteren Transportsystem besonders einfach lösen, da nun der Mover nicht nur die Ordnung der Produkte bewerkstelligt, sondern auch die Übergabe von dem einen Transportsystem auf das nächste Transportsystem realisiert. Somit kann der Mover weitere Aufgaben übernehmen.

In einer zweckmäßigen Weiterbildung ist vorgesehen, dass der Mover das Produkt auf dem Transportsystem und/oder auf das weitere Transportsystem und/oder auf einen Puffer und/oder auf ein Verpackungsmaterial bewegt. Je nach gewünschten weiteren Verarbeitungsschritten wählt der Mover flexibel aus, wohin er die Produkte überführen möchte. Bei der Überführung auf einen Puffer lassen sich so besonders einfach Produkte zwischen speichern, um sie zu einem geeigneten Zeitpunkt in den weiteren Verarbeitungsprozess zurückzubringen. Bei einer Überführung auf das Verpackungsmaterial könnte sich ein Verpackungsprozess beispielsweise auf einer horizontalen Schlauchbeutelmaschine anschließen. Die Flexibilität der Anordnung erhöht sich weiter.

In einer zweckmäßigen Weiterbildung ist vorgesehen, dass der Mover nach Übergabe zumindest eines Produkts an das weitere Transportsystem in einen Bereich der Antriebsfläche gelangt, der nicht von dem Transportsystem überdeckt ist. In einer zweckmäßigen Ausgestaltung kann zu dem vorgesehen sein, dass die Antriebsfläche so ausgebildet ist, dass diese nicht komplett von dem Transportsystem und/oder dem weiteren Transportsystem überdeckt ist. Dieser Bereich der Antriebsfläche kann somit zur gezielten Rückführung der Mover zur erneuten Übernahme und/oder Abgabe der Produkte verwendet werden. Auf diese Art zurückgeführte Mover behindern nicht den Transport der Produkte auf dem weiteren Transportsystem.

In einer zweckmäßigen Weiterbildung ist vorgesehen, dass das weitere Transportsystem zwischen Antriebsfläche und Mover angeordnet ist. Damit kann der Mover auch die Produkte gezielt im Bereich des weiteren Transportsystems bewegen, in die gewünschte Gruppierung überführen oder Ähnliches.

In einer zweckmäßigen Weiterbildung ist vorgesehen, dass der Mover das Produkt von dem einen Transportsystem auf das weiteres Transportsystem, insbesondere schiebend, überführt. Bei dieser Variante ist der Mover besonders einfach ausgebildet, da er kein Betätigungselement aufweisen muss, welches ein Anheben des Produkts erforderlich macht. Auch das Betätigungselement selbst kann starr mit dem Mover verbunden sein oder kann bereits Teil des Movers selbst sein, da eine entsprechende Bewegungsänderung über den Mover selbst erfolgen kann.

In einer zweckmäßigen Weiterbildung ist vorgesehen, dass der Mover zumindest ein Betätigungsmittel umfasst, das zum Transport zumindest eines Produkts in Kontakt mit diesem kommt. Ein entsprechendes Betätigungsmittel kann auf die jeweilige Form des Produkts ausgerichtet sein zum besonders schonenden Handling oder Greifen des Produkts.

In einer zweckmäßigen Weiterbildung ist vorgesehen, dass zumindest ein Mover das Produkt in eine Position bringt, die abhängt von einer Position eines Produkts, das bereits von einem Mover bewegt wurde. Damit ist es für den Mover möglich, in gewünschter Art und Weise die Produkte zu gruppieren, beispielsweise in Reihen bzw. Kolonnen hintereinander oder ähnliche Anordnungen.

In einer zweckmäßigen Weiterbildung ist vorgesehen, dass sich der Mover parallel oder entgegengesetzt oder schräg zu einer Transportrichtung des Transportsystems bewegt im Bereich des Transportsystems. Damit lässt sich auch der Bereich des Transportsystems zur Rückführung des Mover zu einer Position nutzen, bei der ein neues Produkt wieder aufgenommen wird.

In einer zweckmäßigen Weiterbildung ist vorgesehen, dass die Bewegungsrichtung des weiteren Transportsystems parallel und/oder senkrecht und/oder mit einem beliebigen Winkel zur Bewegungsrichtung des Transportsystems orientiert ist. Je nach Anwendungsfall kann der Mover gezielt Produkte geeignet angeordneten Transportsystemen zuführen. Dadurch erhöht sich die Flexibilität der Vorrichtung weiter.

In einer zweckmäßigen Weiterbildung ist das Transportsystem und/oder das weitere Transportsystem so ausgebildet, dass zumindest zwei Produkte nebeneinander bezogen auf die jeweilige Transportrichtung angeordnet werden können. Damit können die Mover die Produkte beispielsweise in zwei oder mehr Kolonnen anordnen, die parallelen Verpackungsprozessen zugeführt werden können.

In einer zweckmäßigen Weiterbildung ist vorgesehen, dass der Mover zumindest zwei Produkte bewegt. Dadurch wird die Ausbringung des Systems erhöht. Besonders bevorzugt sind zumindest zwei Mover vorgesehen.

In einer zweckmäßigen Weiterbildung ist vorgesehen, dass der Mover das zumindest eine Produkt trägt, insbesondere auf seiner Oberseite. Dadurch kann das Handling der Produkte weiter vereinfacht werden, da der Mover nicht notwendigerweise Betätigungsmittel aufweisen muss.

In einer zweckmäßigen Weiterbildung ist vorgesehen, dass der Mover mindestens ein Produkt auf eine Ebene schiebt, ohne dass Seitenführungen nötig sind. Vorzugsweise kann das Messsystem die Lage des Produkts als auch die Lage des Movers fortlaufend erkennen und der Mover derart angesteuert werden, dass das Produkt in die gewünschte Richtung befördert wird.

Weitere zweckmäßige Weiterbildungen ergeben sich aus weiteren abhängigen Ansprüchen und aus der Beschreibung.

### Zeichnung

Ausführungsbeispiele der erfindungsgemäßen Vorrichtung sind in der Zeichnung dargestellt und werden nachfolgend näher beschrieben.

Es zeigen:
Figur 1 eine perspektivische Ansicht der Transportvorrichtung,
Figur 2 eine Schnittdarstellung der gesamten Vorrichtung,
Figur 3 eine Draufsicht auf ein Transportsystem mit parallelem Zuführ- und Abführband,
Figur 4 eine Draufsicht auf das Transportsystem gemäß Figur 3 in einem Zustand, wo bereits weitere Produkte überführt wurden,
Figur 5 eine Draufsicht auf das Transportsystem gemäß Figur 3 in einem Zustand, wo noch weitere Produkte überführt wurden,
Figur 6 eine Draufsicht auf ein weiteres Transportsystem mit einem senkrecht zur Zuführrichtung verlaufenden Abführband,
Figur 7 eine Draufsicht auf ein weiteres Transportsystem, auf dessen Abführband mehrere Produkte nebeneinander liegend abgeführt werden können,
Figur 8 eine Draufsicht auf ein weiteres Transportsystem mit einem Mover, der mehrere Produkte gleichzeitig bewegen kann,
Figur 9 eine Draufsicht auf ein weiteres Transportsystem mit Puffer-bzw. Speicherfunktion,
Figur 10 ein alternatives Ausführungsbeispiel, bei dem die Mover die Produkte tragen,
Figur 11 ein weiteres alternatives Ausführungsbeispiel mit unterschiedlichen Transportsystemen,
Figur 12 ein schräg angeordnetes Transportsystem, wobei ein Mover mehrere Produkte aufnehmen kann,
Figur 13 ein weiteres alternatives Ausführungsbeispiel, bei dem mehrere Produkte einem Mover stapelförmig zugeführt werden sowie
Figur 14 ein weiteres alternatives Ausführungsbeispiel, bei dem mehrere Produkte einem Mover zugeführt werden, sodass diese nebeneinander zu liegen kommen.

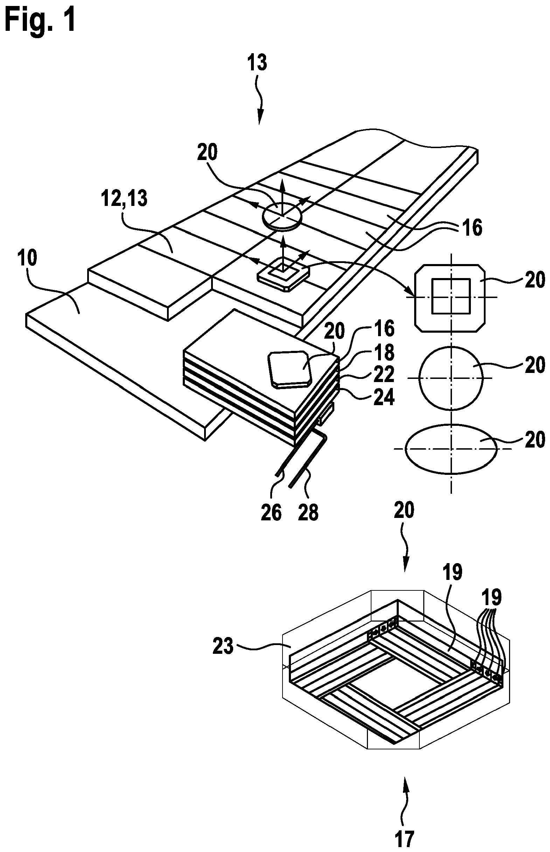

Bei dem Ausführungsbeispiel gemäß Figur 1 sind beispielhaft zwei Mover 20 dargestellt mit unterschiedlichen Grundformen, nämlich ein im Wesentlichen rechteckförmiger Mover 20 bzw. ein runder Mover 20. Auch eine ovale oder auch anders ausgeführte Gestaltung wäre denkbar. Die Trägerplatte 12 bzw. Antriebsfläche 13 besteht aus mehreren Einzelteilen bzw. Kacheln 16. Die Kacheln 16 sind quadratisch bzw. rechteckförmig ausgebildet. Die Kacheln 16 besitzen im Wesentlichen eine planare Oberfläche und sind schichtweise aufgebaut. So umfasst die Kachel 16 eine Spulenebene 18, eine Sensorebene 22 sowie eine Leistungselektronikebene 24. Weiterhin ist ein Bussystem 26 vorgesehen, welches die Kacheln 16 mit einem nicht dargestellten Zentralrechner bzw. Prozessor verbindet. Außerdem ist eine Spannungsversorgung 28 vorgesehen mit zugehörigen Anschlüssen, über die die Leistungselektronikebene 24 bzw. die Spulenebene 18 und/oder die Sensorebene 22 mit Energie versorgt werden kann.

Die Grundplattform 10 beschreibt das Basiselement. Aus dieser ergeben sich die nötigen Gestaltungsmöglichkeiten des Systems im Raum. Unter der Grundplattform 10 wird der Systemträger bzw. ein Maschinengestell verstanden. Sie muss die notwendige Steifigkeit aufweisen. Die Grundplattform 10 kann bereits Steuerungskomponenten und Leistungselektronik aufnehmen. Optional könnte auch bereits die Trägerplatte 12 bzw. Antriebsfläche 13 Bestandteil der Grundplattform 10 sein. Die Grundplattform 10 bietet die Basis oder das Element zur Anordnung weiterer Funktionseinheiten. Die Grundplattform 10 ist weiterhin die Basis oder das Element zur Anordnung weiterer Transportsysteme. Die Grundplattform 10 soll kompatibel mit anderen Grundplattformen sein. Auf der Oberfläche der Grundplattform 10 sind auf der Antriebsfläche 13 die relativ hierzu beweglichen Mover 20 angeordnet. Hierzu erzeugt die Antriebsfläche 13 bzw. die Trägerplatte 12 eine Antriebskraft, die auf den Mover 20 wirkt und ihn in die gewünschte Bewegung versetzt. Die stationäre Antriebsfläche 13 ist vorzugsweise planar ausgeführt. Der Mover 20 wird so angesteuert, dass er zumindest in zwei Freiheitsgraden verschiebbar und/oder drehbar ist. Damit lassen sich insbesondere wie nachfolgend beschrieben unterschiedliche Stationen in flexibler Weise anfahren, wenn die Antriebsfläche 13 diese in geeigneter Weise miteinander verbindet.

Der Mover 20 beschreibt das bewegbare Element der Vorrichtung. Zum einen dient der Mover 20 der Erzeugung einer Relativbewegung gegenüber der Trägerplatte 12 bzw. Antriebsfläche 13. Weiterhin erfolgt eine Interaktion zwischen den Movern 20 oder zwischen den Moverkomponenten. Weiterhin erzeugt der Mover 20 eine Kraft auf die Trägerplatte 12 bzw. Antriebsfläche 13. Hierzu umfasst der Mover 20 zumindest ein Mittel zur Erzeugung eines Magnetfelds, insbesondere zumindest einen Magneten, vorzugsweise einen Permanentmagneten 19, der mit ein Wanderfeld erzeugenden Spulen 18 der Trägerplatte 12 bzw. der Antriebsfläche 13 zur Bewegungserzeugung zusammenwirkt. Hierbei wird ein Luftspalt zwischen der Trägerplatte 12 bzw. der Antriebsfläche 13 und dem Mover 20 ausgebildet, so dass eine berührungslose Bewegung des Movers 20 relativ zur Antriebsfläche 13 erfolgen kann. Weiterhin kann der Mover 20 Mittel zur Erkennung einer Position aufweisen.

In einer Ansicht der Figur 1 ist der Mover 20 perspektivisch dargestellt. Eine Unterseite 17 des Movers 20 wirkt mit der Trägerplatte 12 bzw. Antriebsfläche 13 zusammen. An der Unterseite 17 des Movers 20 sind mehrere Permanentmagnete 19 angeordnet. Die Magnetfelder benachbart angeordneter Permanentmagnete 19 unterscheiden sich. Im Wesentlichen besteht die Unterseite 17 aus vier Feldern mit jeweils mehreren Permanentmagneten 19. Der mittlere Bereich der Unterseite 17 weist keine Permanentmagnete 19 auf. WO 2013/059934 A1 gibt noch weitere alternative Ausgestaltungen an, die in die Offenbarung der vorliegenden Anmeldung einbezogen sind. Der Mover 20 wird von einem Kollisionsschutz 23 umgeben, was bei einer Vielzahl bewegter Mover 20 vorteilhaft ist.

Die Trägerplatte 12 bzw. Antriebsfläche 13 stellt eine mehrschichtige Komponente gemäß Abbildung 1 dar. Sie weist folgende Basisfunktionalitäten auf. Zum einen umfasst sie Mittel zur Erzeugung einer Relativbewegung gegenüber dem Mover 20. Außerdem wird eine Kraft erzeugt, die auf den Mover 20 wirkt. Außerdem umfasst sie Mittel zur Erzeugung von Distanzen (Luftspalt) zwischen der Trägerplatte 12 und dem Mover 20. Außerdem umfasst die Trägerplatte 12 Mittel zur Erkennung von Positionen und Mittel zur Übertragung von Informationen.

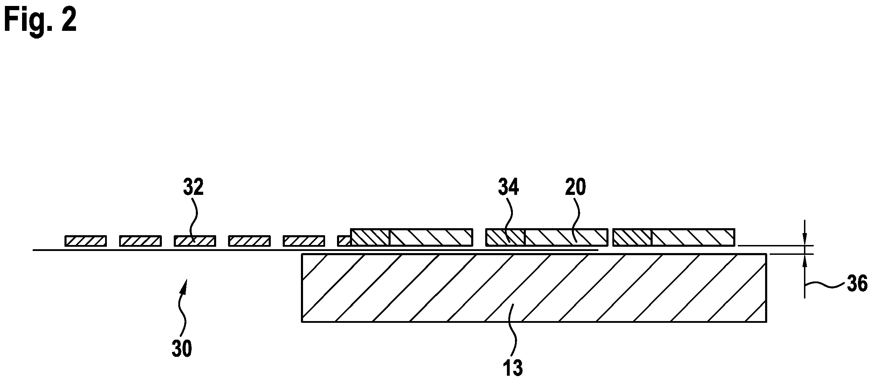

Bei dem Ausführungsbeispiel gemäß Figur 2 fördert ein Transportsystem 30 Produkte 32 in den Erfassungsbereich der Antriebsfläche 13. Das Transportsystem 30 ist zwischen der Oberseite der Antriebsfläche 13 und der Unterseite der Mover 20 angeordnet. Zwischen Unterseite der Mover 20 und Oberseite der Antriebsfläche 13 bildet sich ein Abstand 36 aus, der groß genug ist, um das Transportsystem 30 bzw. Teile davon aufzunehmen. Bei dem Transportsystem 30 kann es sich beispielsweise um ein Transportband handeln. Außerdem weist der Mover 20 zumindest ein Betätigungsmittel 34 auf. Das Betätigungsmittel 34 ist so ausgestaltet, dass es die von dem Transportsystem 30 zugeführten Produkte 32 aufnehmen bzw. berühren und an eine andere Stelle wie nachfolgend erläutert überführen bzw. überschieben kann.

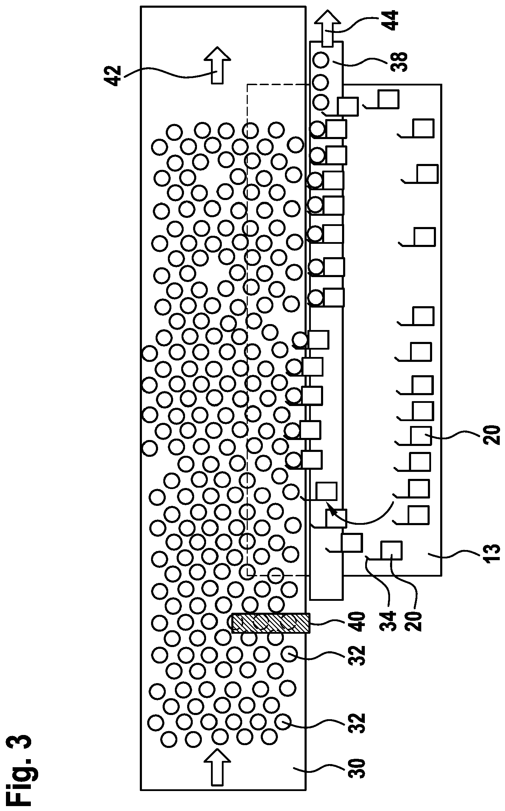

Ein erstes Ausführungsbeispiel einer Transportvorrichtung ist in der Draufsicht der Figur 3 dargestellt. Über das Transportsystem 30 werden eine Vielzahl von Produkte 32 zugeführt. Hierzu können mehrere Produkte 32 ungeordnet und/oder nebeneinander (senkrecht zur Transportrichtung 42 des Transportsystems 30) angeordnet sein. Zumindest der äußere Teil des Transportsystems 30 ist mit einer Produkterkennung 40 bzw. einem Sensor versehen. Hierzu ist die Produkterkennung 40 feststehend gegenüber dem Transportsystem 30 eingebaut an einer Stelle, die eine ungehinderte Inspizierung der Produkte 32 ermöglicht. Die Produkterkennung 40 erfasst die Position und/oder den Zeitpunkt, zu dem das jeweilige Produkt 32 in den Erfassungsbereich der Produkterkennung 40 gelangt. Die Produkterkennung 40 ist vorzugsweise außerhalb der Antriebsfläche 13 angeordnet, könnte jedoch auch innerhalb der Antriebsfläche 13 positioniert sein. Wesentlich jedoch ist, dass die Position der von dem Transportsystem 30 zugeführten Produkte 32 sicher erkannt wird, so dass entsprechende Mover 20 ein entsprechendes Produkt 32 dann aufnehmen, wenn es in den Erfassungsbereich des Movers 20 mit zugehöriger Antriebsfläche 13 gelangt. Die Produkterkennung 40 kann auch dazu verwendet werden, die Produkte 32 auf ihren ordnungsgemäßen Zustand hin zu überprüfen, umso eine Qualitätskontrolle zu realisieren. So könnten die nicht ordnungsgemäßen Produkte 32 durch entsprechende Mover 20 an einer bestimmten Stelle ausgeschleust werden.

In einer ersten Aufgabenstellung sollen einige der zugeführten Produkte 32 von dem Transportsystem 30 auf ein weiteres Transportsystem 38 überführt werden. Hierzu ist das weitere Transportsystem 38 parallel und unmittelbar angrenzend zu dem Transportsystem 30 angeordnet. Somit stimmen die Transportrichtungen 42, 44 der Transportsysteme 30, 38 überein. Auch das weitere Transportsystem 38 überdeckt die Antriebsfläche 13 zumindest teilweise und liegt zwischen der Oberseite der Antriebsfläche 13 und der Unterseite der Mover 20. In einem ersten Schritt werden diejenigen Produkte 32 von Movern 20 auf das weitere Transportsystem 38 überführt, die bereits an dem Rand des Transportsystems 30 liegen, der an das weitere Transportsystem 38 angrenzt. Nachdem die entsprechende Position des außen liegenden Produkts 32 von der Produkterkennung 40 an eine nicht dargestellte Steuerung übermittelt wurde, errechnet diese daraus eine Sollposition für den nächsten Mover 20, der das Produkt 32 dort aufnimmt, indem das zugehörige Betätigungsmittel 34 des Movers 20 in Kontakt mit diesem Produkt 32 kommt. Hierzu wird der entsprechende Mover 20 beschleunigt im wesentlichen auf die Geschwindigkeit des überzuschiebenden Produkts 32. Der Mover 20 nähert die Geschwindigkeit immer weiter an die Geschwindigkeit des Produkts 32 an. Er übernimmt dann das Produkt 32 nahezu stoßfrei. Hierbei bewegt der Mover 20 das Betätigungsmittel 34 so, dass dieses das Produkt 32 aufnehmen bzw. in Kontakt treten kann. Anschließend werden die Richtung und/oder die Geschwindigkeit des Movers 20 so geändert, dass das überzuschiebende Produkt 32 von dem Transportsystem 30 auf das weitere Transportsystem 38 überführt wird. Der Mover 20 synchronisiert sich mit der Geschwindigkeit des weiteren Transportsystems 38. Dieses weitere Transportsystem 38 könnte mit nahezu derselben Geschwindigkeit wie das Transportsystem 30 betrieben werden, dies ist aufgrund der Möglichkeit der Synchronisation des Mover 20 jedoch nicht erforderlich.

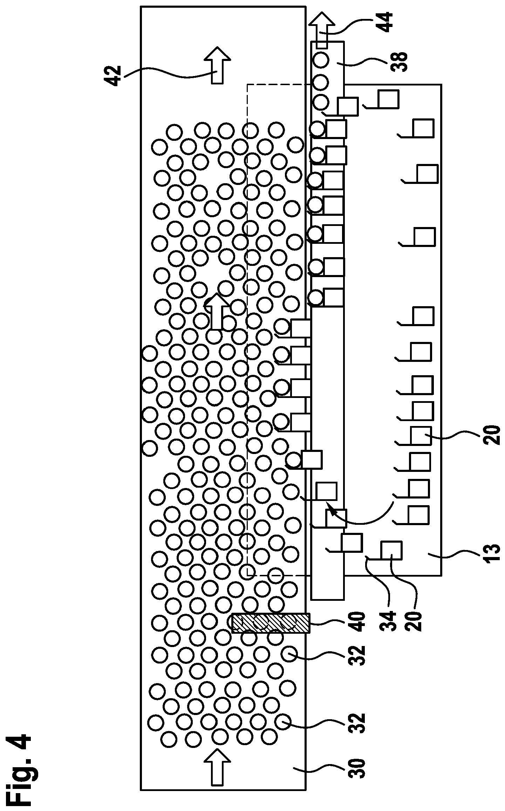

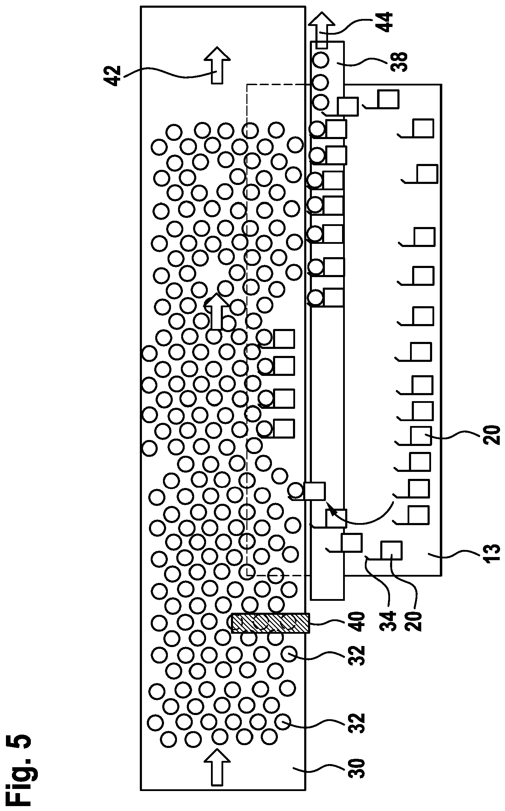

Nachdem sich das Produkt 32 an der gewünschten Stelle im weiteren Transportsystem 38 befindet, beispielsweise in dem gewünschten Abstand zu dem vorhergehenden Produkt 32 und/oder in der gewünschten Reihe, so bremst der Mover 20 ab in der Weise, dass sich das Produkt 32 aus dem Betätigungsmittel 34 des Movers 20 löst. Anschließend fährt der Mover 20 aus dem Erfassungsbereich des weiteren Transportsystems 38. Auf dem Teil der Antriebsfläche 13, die nicht von einem der Transportsysteme 30,38 überdeckt wird, fährt der Mover 20 entgegen den Transportrichtungen 42,44 wieder in die Nähe des Anfangsbereichs des weiteren Transportsystems 38 zurück. Dort wird in bereits beschriebener Art und Weise das nächste überzuschiebende Produkt 32 angefahren. Dieser Vorgang wiederholt sich für jeden einzelnen Mover 20 für eine Vielzahl von überzuschiebenden Produkten 32 wie dies in den weiteren Figuren 4 und 5 ersichtlich ist. Diesen Figuren ist zu entnehmen, dass immer weiter innen liegende Reihen der Produkte 32 überführt werden. Dies ist jedoch nur so lange möglich, wie die Antriebsfläche 13 noch von dem Transportsystem 30 überdeckt wird.

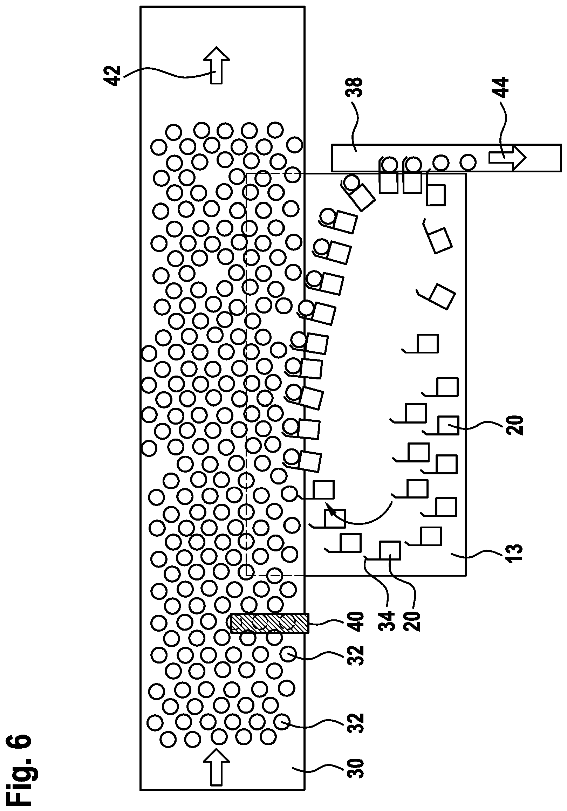

Das Ausführungsbeispiel gemäß Figur 6 unterscheidet sich von demjenigen der vorhergehenden Figuren 3-5 darin, dass nun das weitere Transportsystem 38 quer zur Transportrichtung 42 des Transportsystems 30 angeordnet ist. Es befindet sich parallel zur Stirnseite der Antriebsfläche 13. Es überdeckt jedoch die Antriebsfläche 13 nicht. Vielmehr ist durch die entsprechende Ausprägung des Betätigungsmittel 34 sichergestellt, dass der Mover 20 die Produkte 32 auf das weitere Transportsystem 38 überschieben kann. Hierbei werden die Produkte 32 von dem Transportsystem 30 zunächst direkt auf die Antriebsfläche 13 übergeschoben. Der Mover 20 bringt das entsprechende Produkt 32 in Richtung der Stirnseite der Antriebsfläche 13. Dort wird das Produkt 32 vorzugsweise auf dieselbe Geschwindigkeit gebracht wie diejenige des weiteren Transportsystems 38. Entsprechend sich die Geschwindigkeiten des Produkts 32 und des weiteren Transportsystems 38 näherungsweise, so schiebt der Mover 20 das Produkt 32 auf das weitere Transportsystem 38 über. Hierbei sind besonders bevorzugt die Oberflächen von Antriebsfläche 13 und Transportsystem 38 im wesentlichen auf derselben Höhe. Anschließend werden die Mover 20 wieder entgegen der Transportrichtung 42 des Transportsystems 30 zurückgeführt an eine Stelle, welche benachbart zum Rand des Transportsystems 30 ist. Alternativ kann die Antriebsfläche das weitere Transportsystem 38 je nach Anwendungsfall auch nur teilweise überdecken.

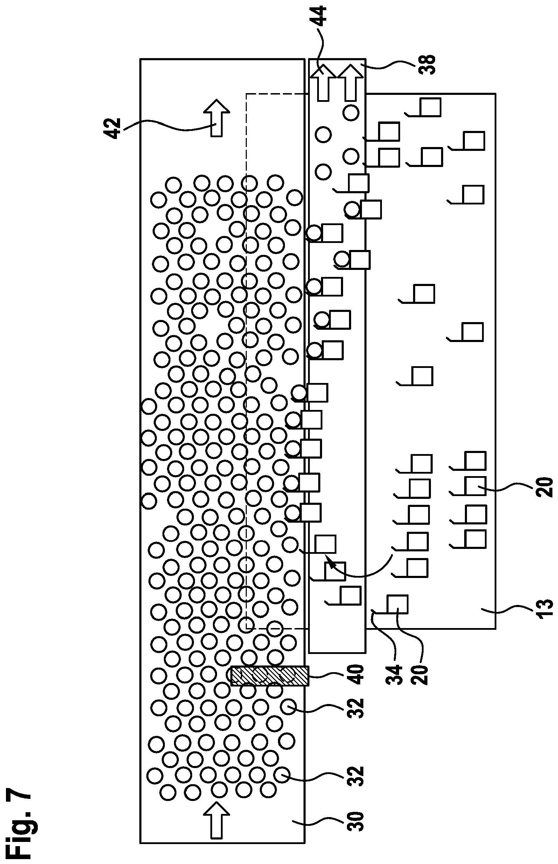

Das Ausführungsbeispiel gemäß Figur 7 unterscheidet sich von demjenigen nach den Figuren 3-5 lediglich darin, dass nun die Produkte 32 auf dem weiteren Transportsystem 38 beispielsweise in zwei Reihen parallel zur Transportrichtung 44 angeordnet werden. Damit erhöht sich die Flexibilität der Gruppierung bzw. Anordnung der Produkte 32 weiter. Alternativ könnten auch zwei oder mehrere Bänder bzw. Transportsysteme 38 vorgesehen sein, vorzugsweise ein Band pro Produkt-Kolonne.

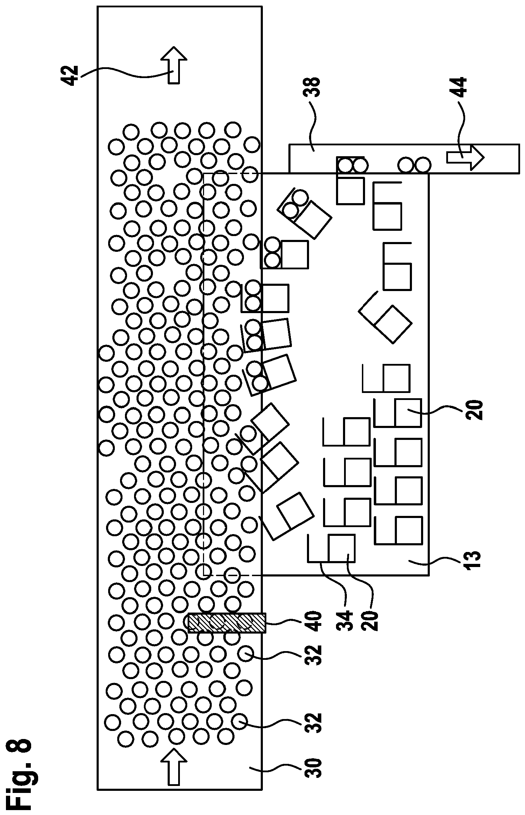

Das Ausführungsbeispiel gemäß Figur 8 unterscheidet sich von demjenigen nach Figur 6 darin, dass nun das Betätigungmittel 34 so ausgebildet ist, dass ein Mover 20 mehrere Produkte 32 zugleich aufnehmen kann. Beispielhaft sind nun zwei Produkte 32 dargestellt, die von einem einzigen Mover 20 aufgenommen werden. Hierzu ist das Betätigungsmittel beispielsweise L-förmig ausgebildet. Am prinzipiellen Vorgehen ändert sich jedoch nichts.

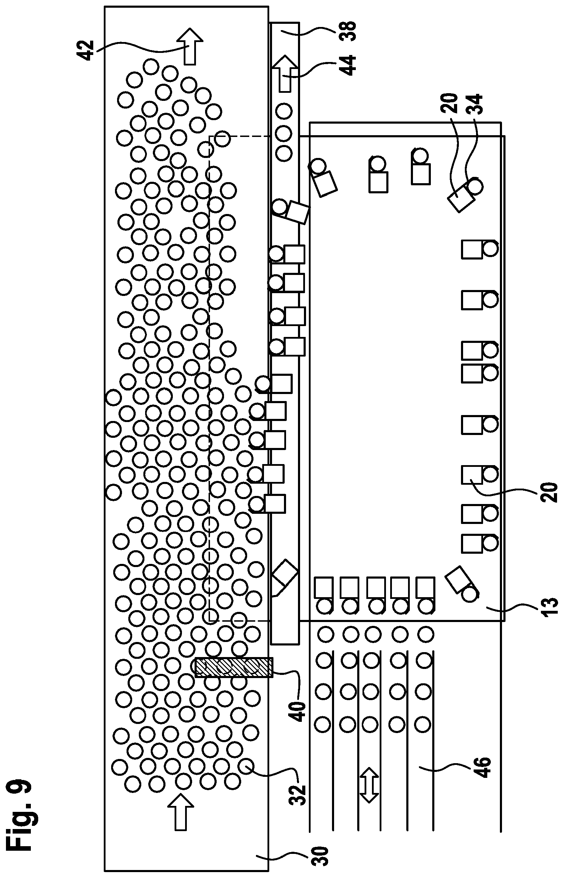

Das Ausführungsbeispiel gemäß Figur 9 unterscheidet sich von demjenigen der Figuren 3-5 darin, dass ein Puffer 46 vorgesehen ist. Hierbei kann es sich um ein weiteres Transportsystem handeln, welches wiederum zwischen Antriebsfläche 13 und Mover 20 angeordnet ist. Im Ausführungsbeispiel ist der Puffer 46 parallel zum Transportsystem 30 angeordnet, wobei das weitere Transportsystem 38 zwischen dem Puffer 46 und dem Transportsystem 30 angeordnet ist. Es nimmt hierbei Produkte 32 in mehreren Reihen parallel zur Transportrichtung 42 auf. Die Mover 20 bewegen die von dem Transportsystem 30 zugeführten Produkte 32 über das weitere Transportsystem 38 auf den Puffer 46. Je nach Zielposition gelangen die Produkte 32 die gewünschten Reihen des Puffers 46. Gegebenenfalls zu einem späteren Zeitpunkt können die gepufferten Produkte 32 auf das weitere Transportsystem 38 überführt werden.

Die Transportsysteme 30,38 sind bevorzugt als Transportbänder wie beispielsweise Zuführbänder oder Abführbänder ausgebildet. Durch die Anordnung des Transportsystems 30, 38 zwischen Mover 20 und Transportfläche 13 wird es möglich, dass die Betätigungsmittel 34 des Movers 20 oder aber der Mover 20 selbst Produkte 32 vom Transportsystem 30 schiebt. Da zwischen dem Mover 20 und der Antriebsfläche 13 ein Abstand 36 besteht, kann in diesen Abstand 36 das Transportsystem bzw. das Band des Transportsystems 30,38 laufen, auf dem die Produkte 32 transportiert werden. Eine Produkterkennung 40, die beispielsweise auf Bildüberwachung basiert, erfasst die Lage der Produkte 32. Die Mover 20 werden derart gesteuert, dass die Produkte 32 gezielt vom Transportsystem 30 entfernt und weiteren Maschinen und/oder Transportsystemen 38 zugeführt werden können. Die Anordnung zeichnet sich durch besondere Flexibilität aus. So können die Transportsysteme 30,38 mit unterschiedlichem Winkel, parallel zur Transportrichtung 42 oder gegenläufiger Transportrichtung oder auch mit unterschiedlichen Band-Geometrien ausgewählt und angeordnet werden. Mover 20 in Verbindung mit der zur Bewegung notwendigen Antriebsfläche 13 werden nur dort eingesetzt, wo deren Funktion benötigt werden. Längere Transportwege können weiterhin mit kostengünstigeren Transportsystemen 30,38 wie Bänder, Ketten etc. realisiert werden.

Wie bereits in Figur 9 gezeigt kann mit dem System auch eine Produktpufferfunktion realisiert werden. Wenn beispielsweise eine nachfolgende Maschine stoppt, können die Produkte 32 auf dem Puffer 46 bzw. Speicherband gepuffert werden. Darüber hinaus können auch nur einzelne Produkte 32 dem Puffer 46 zugeführt werden bzw. gezielt aus dem Puffer 46 entleert werden.

Gerade bei einer ungeordneten Zuführung der Produkte 32 stellt die Produkterkennung 40 sicher, dass die Position eines zu überführenden Produkts 32 genau erfasst und von dem Mover 20 gezielt zum Überschieben angefahren werden kann. Hierbei wird die Geschwindigkeit des Transportsystems 30 mit berücksichtigt. Somit können die Produkte 32 unsortiert und ungeordnet auf das Transportsystem 30 gegeben werden, da anschließend eine gezielte Überführung durch die Mover 20 möglich wird. Außerdem lassen sich beliebige unterschiedliche Möglichkeiten realisieren, Produkte 32 beispielsweise in Gruppen an unterschiedliche weitere Transportsysteme 38 oder weitere Maschinen oder sonstige Funktionen wie Puffer 46 zu überführen. Außerdem könnte das Transportsystem 30, 38 auch genutzt werden, um den Mover 20 selbst zu transportieren. So könnten so transportierte Mover 20 noch weitere Strecken zwischen mehreren Antriebsflächen 13 zurücklegen oder gezielt zu Wartungszwecken an eine bestimmte Stelle gebracht werden. Auch könnten die Mover 20 zusammen mit aufgenommenen Produkten 32 bewegt und zu einer weiteren Bearbeitungsstation gebracht werden, wo der überführte Mover 20 das aufgenommene Produkt 32 über eine dort befindliche Antriebsfläche 13 weiter bewegt.

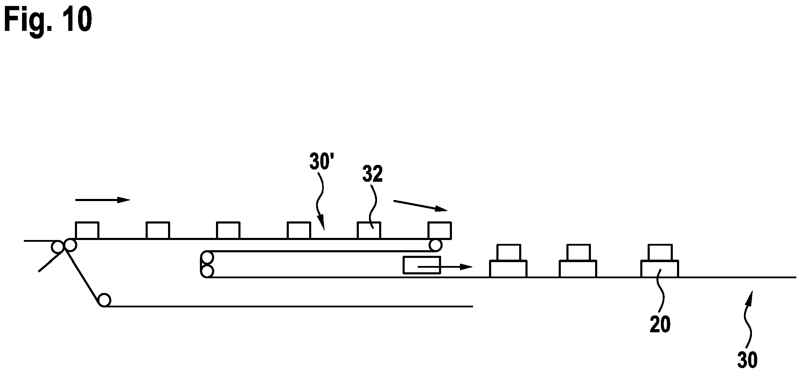

Bei dem Ausführungsbeispiel gemäß Figur 10 tragen die Mover 20 die jeweiligen Produkte 32. Wiederum werden die Produkte 32 durch das Transportsystem 30 zugeführt. Die Mover 20 warten zur Aufnahme der jeweiligen Produkte 32 unter dem Abschnitt des Transportsystems 30, welches die Produkte 32 zuführt. Bei dem Ausführungsbeispiel gemäß Figur 10 wird das Transportsystem 30 nach dem Übergabepunkt nach unten hin umgelenkt in der Weise, dass auch die Mover 20 sich oberhalb desselben Transportsystems 30 befinden, das auch die Produkte 32 zuführt. Die Abgabe des Produkts 32 auf den wartenden Mover 20 erfolgt am Umlenkpunkt. Hierzu kann die Oberseite des Movers 20 in geeigneter Weise ausgebildet sein. Alternativ könnten auch Betätigungsmittel 34 vorgesehen sein, die die Produkte 32 in geeigneter Weise tragen. Dasselbe Band des Transportsystem 30 wird so umgelenkt, dass es einerseits die Produkte 32 zuführt, andererseits wiederum zwischen Mover 20 und Antriebsfläche 13 angeordnet ist.

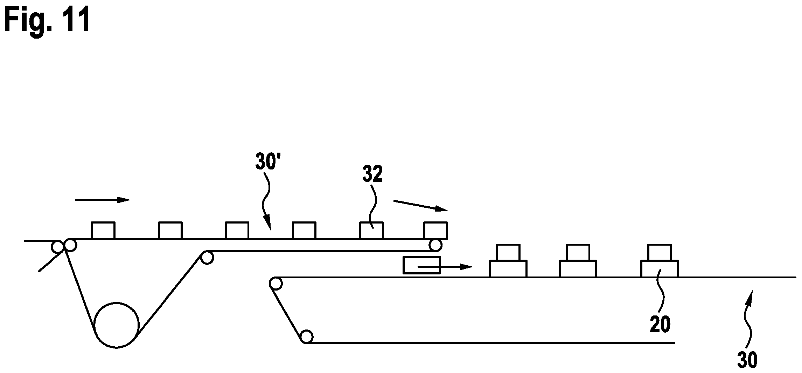

Alternativ wie in Figur 11 dargestellt könnte vorgesehen sein, dass die Mover 20 oberhalb eines weiteren, von dem Transportsystem 30', das die Produkte 32 zuführt, unabhängigen weiteren Transportsystem 30 angeordnet sind. Außerdem könnte das Transportsystem 30 eine gewisse Breite aufweisen, sodass mehrere Produkte 32 nebeneinanderliegend zugeführt werden. Jeder Mover 20 synchronisiert und positioniert sich entsprechend dem eingehenden Produkt 32 unterhalb des Transportsystems 30' und nimmt das zugeführte Produkt 32 in geeigneter Weise auf. Anschließend kann das so aufgenommene Produkt 32 je nach Anwendungsfall dem weiteren Transportsystem 38 zugeführt werden.

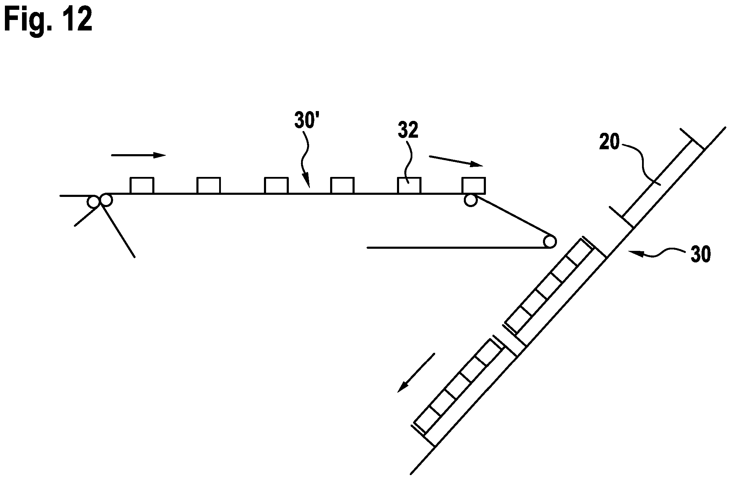

Das Ausführungsbeispiel gemäß Figur 12 unterscheidet sich von demjenigen nach Figur 11 darin, dass das Transportsystem 30 schräg angeordnet ist. Außerdem weisen die Mover 20 Aufnahmemittel auf, sodass die über das Transportsystem 30' zugeführten Produkte 32 trotz der schrägen Ausrichtung der Mover 20 parallel zur Transportebene des Transportsystems 30 nicht wegrutschen können. Außerdem können auch mehrere Produkte 32 auf einen einzigen Mover 20 gebracht und von diesem transportiert werden.

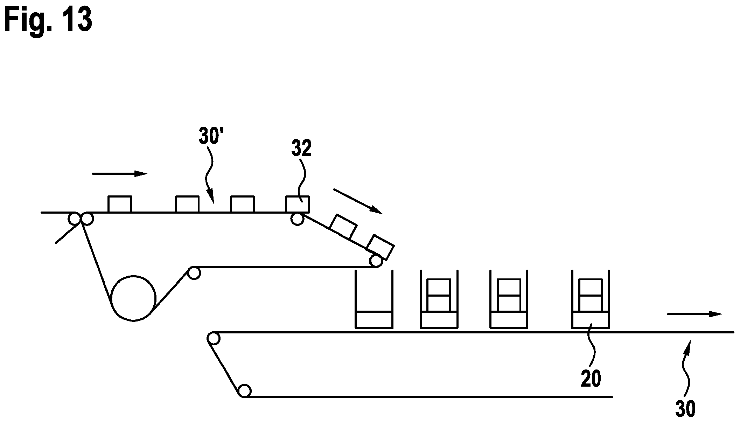

Das Ausführungsbeispiel gemäß Figur 13 unterscheidet sich von demjenigen nach Figur 11 darin, dass mehrere Produkte 32 von einem einzigen Mover 20 aufgenommen werden können. Beispielsweise werden die aufzunehmenden Produkte 32 aufeinander gestapelt. Wiederum ist das Transportsystem 30 zwischen Mover 20 und Antriebsfläche 13 angeordnet. Außerdem können noch weitere Produkte 32 gestapelt bzw. beladen und weiter transportiert werden. So kann beispielsweise der Mover 20 warten, bis auch das zweite bzw. nächste Produkt 32 aufgenommen wurde. Alternativ könnte der Mover 20 auch jedes Mal neu eine Ladeposition anfahren und so Produkte 32 aufeinander stapeln.

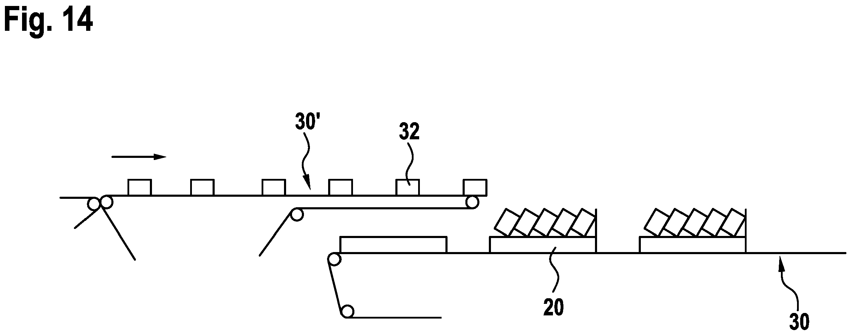

Das Ausführungsbeispiel gemäß Figur 14 unterscheidet sich von demjenigen der Figur 11 darin, dass nun mehrere Produkte 32 schräg auf einem einzigen Mover 20 aufgenommen werden können. Hierzu weist der Mover 20 ein vorzugsweise schräg angeordnetes Stützelement auf, das das erste zugeführte Produkt 32 aufnimmt. Die weiteren Produkte 32 werden nachfolgend zugeführt, indem der Mover 20 sukzessive die nächste Beladeposition für das nächste Produkt 32 anfährt.

Alternativ können die Produkte 32 auch in ein Verpackungsmaterial wie beispielsweise eine Folie überführt werden, welches durch das weitere Transportsystem 38 in geeigneter Weise bereitgestellt wird. Der Mover 20 überführt somit die Produkte 32 beispielsweise in das Verpackungsmaterial. Das Verpackungsmaterial somit auch die dorthin überführten Produkte 32 können weiteren Verarbeitungsschritten zugeführt werden. Hierbei könnte es sich beispielsweise um eine Schlauchbeutelmaschine handeln, die das Verpackungsmaterial in an sich bekannter Weise zu einem Schlauchbeutel formt und so das Produkt 32 darin verpackt.

Alternativ können die Mover 20 lediglich so verwendet werden, dass die auf dem Transportsystem 30 zugeführten Produkte 32 dort von den Movern 20 lediglich verschoben bzw. umgeordnet werden. Gerade bei ungeordnet zugeführten Produkten 32 dienen die Mover 20 dazu, geordnete Gruppen und/oder geordnete Reihen und/oder geordnete Produktabstände auf dem Transportsystem 30 herzustellen.

Zwischen der Abnahme bzw. Übernahme der Produkte 32 vom Transportsystem 30 und der Abgabe zum weiteren Transportsystem 38 und/oder Puffer 46 können beliebige Handlingsfunktionen durchgeführt werden wie beispielsweise das Stapeln oder Gruppieren etc.

Wenn mehrere Produkte 32 durch einen einzigen Mover 20 transportiert werden, erhöht sich die Ausbringung bei gleicher Dynamik des Mover 20. Außerdem erhöht sich die Flexibilität, wenn der Mover 20 in der Lage ist, je nach Bedarf nur ein Produkt 32 oder ganze Gruppen von Produkten 32 zu transportieren. Entsprechende Mischungen von Einzelprodukten und Gruppen werden möglich. Auch verschiedene Gruppierungen sind an sich möglich.

Die Vorrichtung ist Bestandteil eines flexiblen Transportsystems für unterschiedliche Transportanwendungen, insbesondere in der Verpackungstechnik von beispielsweise Pharmazeutika oder Lebensmittel. Die Verwendung ist hierauf jedoch nicht eingeschränkt.

## Patentansprüche

1. Vorrichtung zum Überführen von Produkten (32), umfassend zumindest einen Mover (20), der zumindest einen Permanentmagneten (19) aufweist, der mit dem Mover (20) verbunden ist, wobei der Permanentmagnet (19) mit zumindest einer Spulenebene (18) einer Antriebsfläche (13) zum berührungslosen Antrieb des Movers (20) zusammenwirkt, mit einer Spannungsversorgung (28) mit zugehörigen Anschlüssen, über die die Spulenebene (18) mit Energie versorgbar ist, wobei der Mover (20) zu einer Erzeugung einer Relativbewegung gegenüber einer Antriebsfläche (13) dient und so ansteuerbar ausgebildet ist, dass er zumindest in zwei Freiheitsgraden verschiebbar und/oder drehbar ist, weiterhin umfassend zumindest ein Transportsystem (30, 38), das dazu eingerichtet ist, Produkte (32) zu transportieren, **gekennzeichnet durch** ein Bussystem (26), wobei die Antriebsfläche (13) aus mehreren quadratischen bzw. rechteckförmigen Kacheln (16) besteht, die eine im Wesentlchen planare Oberfläche besitzen und schichtweise aufgebaut sind sowie eine Sensorebene (22) und eine Leistungselektronikebene (24) umfassen, die über die Spannungsversorgung (28) mit Energie versorgbar sind, wobei das Bussystem (26) die Kacheln (16) mit einem Zentralrechner und/oder Prozessor verbindet, und wobei das Transportsystem (30, 38), vorzugsweise ein Transportband, zwischen Antriebsfläche (13) und Mover (20) angeordnet ist.

2. Vorrichtung nach Anspruch 1, **dadurch gekennzeichnet, dass** zumindest eine Produkterkennung (40) bzw. Sensor im Bereich des Transportsystems (30) vorgesehen ist, vorzugsweise außerhalb der Antriebsfläche (13).

3. Vorrichtung nach Anspruch 2, **dadurch gekennzeichnet, dass** der Mover (20) in Abhängigkeit von der Produkterkennung (40) bzw. dem Sensor eine bestimmte Position anfährt, um das erkannte bzw. sensierte Produkt (32) zu bewegen

4. Vorrichtung nach einem der vorhergehenden Ansprüche, **dadurch gekennzeichnet, dass** der Mover (20) auf eine Geschwindigkeit gebracht wird, die in etwa einer Geschwindigkeit des Transportsystems (30,38) entspricht.

5. Vorrichtung nach einem der vorhergehenden Ansprüche, **dadurch gekennzeichnet, dass** der Mover (20) zumindest ein Produkt (32) relativ zu dem Transportsystem (30,38), vorzugsweise mit einer Richtungsänderung bzw. Drehung versehen, bewegt.

6. Vorrichtung nach einem der vorhergehenden Ansprüche, **dadurch gekennzeichnet, dass** zumindest ein weiteres Transportsystem (38) benachbart zu dem Transportsystem (30) und/oder der Antriebsfläche (13) vorgesehen ist.

7. Vorrichtung nach Anspruch 6, **dadurch gekennzeichnet, dass** der Mover (20) das zumindest eine Produkt (32) auf dem Transportsystem (30) und/oder auf das weitere Transportsystem (38) und/oder auf einen Puffer (46) und/oder auf ein Verpackungsmaterial bewegt.

8. Vorrichtung nach Anspruch 6 oder 7, **dadurch gekennzeichnet, dass** der Mover (20) nach Übergabe zumindest eines Produkts (32), insbesondere an das weitere Transportsystem (38), in einen Bereich der Antriebsfläche (13) gelangt, der nicht von dem Transportsystem (30,38) überdeckt ist.

9. Vorrichtung nach einem der Ansprüche 6 bis 8, **dadurch gekennzeichnet, dass** das weitere Transportsystem (38) zwischen Antriebsfläche (13) und Mover (20) angeordnet ist.

10. Vorrichtung nach einem der Ansprüche 6 bis 9, **dadurch gekennzeichnet, dass** der Mover (20) das zumindest eine Produkt (32) von dem einen Transportsystem (30) auf das weiteres Transportsystem (38), insbesondere schiebend, überführt.

11. Vorrichtung nach einem der vorhergehenden Ansprüche, **dadurch gekennzeichnet, dass** der Mover (20) zumindest ein Betätigungsmittel (34) umfasst, das zum Transport zumindest eines Produkts (32) in Kontakt mit diesem kommt.

12. Vorrichtung nach einem der vorhergehenden Ansprüche, **dadurch gekennzeichnet, dass** zumindest ein Mover (20) das zumindest eine Produkt (32) in eine Position bringt, die abhängt von einer Position eines Produkts (32), das bereits von einem Mover (20) bewegt wurde.

13. Vorrichtung nach einem der vorhergehenden Ansprüche, **dadurch gekennzeichnet, dass** die Antriebsfläche (13) so ausgebildet ist, dass diese nicht komplett von dem Transportsystem (30) und/oder einem weiteren Transportsystem (38) überdeckt ist.

14. Vorrichtung nach einem der vorhergehenden Ansprüche, **dadurch gekennzeichnet, dass** der Mover (20) zumindest zwei Produkte (32) bewegt.

## Claims

1. Device for transferring products (32),
comprising at least one mover (20) that has at least one permanent magnet (19) which is connected with the mover (20),
wherein the permanent magnet (19) interacts with at least one coil plane (18) of a propulsion surface (13) for a contactless propulsion of the mover (20), with a voltage supply (28) with allocated connections, via which the coil plane (18) is suppliable with power,
wherein the mover (20) serves to generate a relative movement with respect to a propulsion surface (13) and is implemented to be actuatable in such a way that it is displaceable and/or rotatable in at least two degrees of freedom, further comprising at least one transport system (30, 38) that is configured for transporting products (32),
**characterised by**
a bus system (26),
wherein the propulsion surface (13) is implemented of a plurality of square, respectively rectangle-shaped tiles (16), which have a substantially planar surface, which are structured layer-wise and which comprise a sensor plane (22) and a power electronics plane (24) that are suppliable with energy via the voltage supply (28),
wherein the bus system (26) connects the tiles (16) to a central computer and/or processor, and
wherein the transport system (30, 38), preferably a transport belt, is arranged between the propulsion surface (13) and the mover (20).

2. Device according to claim 1,
**characterised in that** at least one product recognition (40), respectively sensor, is provided in the region of the transport system (30), preferably outside the propulsion surface (13).

3. Device according to claim 2,
**characterised in that,** depending on the product recognition (40), respectively the sensor, the mover (20) approaches a specific position in order to move the identified, respectively sensed, product (32).

4. Device according to one of the preceding claims,
**characterised in that** the mover (20) is brought up to a speed approximately corresponding to a speed of the transport system (30, 38).

5. Device according to one of the preceding claims,
**characterised in that** the mover (20) moves at least one product (32) relative to the transport system (30, 38), preferably provided with a change of direction, respectively a rotation.

6. Device according to one of the preceding claims,
**characterised in that** at least one further transport system (38) is provided neighbouring the transport system (30) and/or the propulsion surface (13).

7. Device according to claim 6,
**characterised in that** the mover (20) moves the at least one product (32) on the transport system (30) and/or onto the further transport system (38) and/or onto a buffer (46) and/or onto a packaging material.

8. Device according to claim 6 or 7,
**characterised in that** following a transfer of at least one product (32), in particular to the further transport system (38), the mover (20) arrives in a region of the propulsion surface (13) that is not covered by the transport system (30, 38).

9. Device according to one of claims 6 to 8,
**characterised in that** the further transport system (38) is arranged between the propulsion surface (13) and the mover (20).

10. Device according to one of claims 6 to 9,
**characterised in that** the mover (20) conveys the at least one product (32) from the one transport system (30) to the further transport system (38), in particular in a pushing manner.

11. Device according to one of the preceding claims,
**characterised in that** the mover (20) comprises at least one activation means (34) which, for a transport of at least one product (32), comes into contact with the at least one product (32).

12. Device according to one of the preceding claims,
**characterised in that** at least one mover (20) brings the at least one product (32) into a position that depends on a position of a product (32) that has already been moved by a mover (20).

13. Device according to one of the preceding claims,
**characterised in that** the propulsion surface (23) is implemented such that it is not completely covered by the transport system (30) and/or a further transport system (38).

14. Device according to one of the preceding claims,
**characterised in that** the mover (20) moves at least two products (32).

## Revendications

1. Dispositif pour un transfert de produits (32),
comprenant au moins un déplaceur (20) qui comporte au moins un aimant permanent (19) raccordé au déplaceur (20),
où l'aimant permanent (19) interagit avec au moins un plan de bobine (18) d'une surface d'entraînement (13) pour un entraînement sans-touche du déplaceur (20),
avec une alimentation de voltage (28) comprenant des connexions allouées, par le biais de laquelle le plan de bobine (18) peut être fourni d'énergie,
où le déplaceur (20) sert pour une génération d'un mouvement relatif par rapport à une surface d'entraînement (13) et est réalisé à être actionnable de telle manière qu'il soit déplaçable et/ou tournable en au moins deux degrés de liberté, aussi comprenant au moins un système de transport (30, 38) configuré pour transporter des produits (32),
**caractérisé par**
un système de bus (26),
où la surface d'entraînement (13) est composée de plusieurs vignettes carrées ou rectangulaires (16), qui ont une surface sensiblement planaire, qui sont construites en couches et qui comprennent un plan de capteur (22) et un plan d'électronique de puissance (24) lesquels peuvent être fournis d'énergie via l'alimentation de voltage (28),
où le système de bus (26) raccorde les vignettes (16) à un ordinateur central et/ou un processeur et
où le système de transport (30, 38), préférablement une bande transporteuse, est disposé entre la surface d'entraînement (13) et le déplaceur (20).

2. Dispositif selon la revendication 1,
**caractérisé en ce qu'**au moins une reconnaissance de produit (40), respectivement au moins un capteur, est prévue/prévu dans les environs du système de transport (30), préférablement en dehors de la surface d'entraînement (13).

3. Dispositif selon la revendication 2,
**caractérisé en ce qu'**en dépendance de la reconnaissance de produit (40), respectivement du capteur, le déplaceur (20) se met dans une position définie pour mouvoir le produit (32) reconnu, respectivement capté.

4. Dispositif selon l'une des revendications précédentes,
**caractérisé en ce que** le déplaceur (20) est mis dans une vélocité correspondante approximativement à une vélocité du système de transport (30, 38).

5. Dispositif selon l'une des revendications précédentes,
**caractérisé en ce que** le déplaceur (20) meut au moins un produit (32) par rapport au système de transport (30, 38), préférablement fourni d'un changement de direction, respectivement d'une rotation.

6. Dispositif selon l'une des revendications précédentes,
**caractérisé en ce qu'**au moins un système de transport de plus (38) est prévu voisinant le système de transport (30) et/ou la surface d'entraînement (13).

7. Dispositif selon la revendication 6,
**caractérisé en ce que** le déplaceur (20) meut l'au moins un produit (32) sur le système de transport (30) et/ou sur le système de transport de plus (38) et/ou sur un butoir (46) et/ou sur un matériau d'emballage.

8. Dispositif selon la revendication 6 ou 7,
**caractérisé en ce que,** suivant le transfert d'au moins un produit (32), en particulier au système de transport de plus (38), le déplaceur (20) arrive dans une zone de la surface d'entraînement (13) qui n'est pas couverte du système de transport (30, 38).

9. Dispositif selon l'une des revendications 6 à 8,
**caractérisé en ce que** le système de transport de plus (38) est disposé entre la surface d'entraînement (13) et le déplaceur (20).

10. Dispositif selon l'une des revendications 6 à 9,
**caractérisé en ce que** le déplaceur (20) transfère l'au moins un produit (32) de l'un système de transport (30) au système de transport de plus (38), en particulier en poussant.

11. Dispositif selon l'une des revendications précédentes,
**caractérisé en ce que** le déplaceur (20) comporte au moins un moyen d'actionnement (34) qui pour transporter au moins un produit (32) entre en contact avec ledit produit (32).

12. Dispositif selon l'une des revendications précédentes,
**caractérisé en ce qu'**au moins un déplaceur (20) met l'au moins un produit (32) dans une position qui dépend d'une position d'un produit (32) déjà mu par un déplaceur (20).

13. Dispositif selon l'une des revendications précédentes,
**caractérisé en ce que** la surface d'entraînement (13) est implémentée de telle manière qu'elle n'est pas complètement couverte du système de transport (30) et/ou d'un système de transport de plus (38).

14. Dispositif selon l'une des revendications précédentes,
**caractérisé en ce que** le déplaceur (20) meut au moins deux produits (32).
